(19) Europäisches Patentamt / European Patent Office / Office européen des brevets

(11) **EP 3 746 759 B1**

(12) **FASCICULE DE BREVET EUROPEEN**

(45) Date de publication et mention
de la délivrance du brevet:
**23.08.2023 Bulletin 2023/34**

(21) Numéro de dépôt: **19700165.4**

(22) Date de dépôt: **09.01.2019**

(51) Classification Internationale des Brevets (IPC):
**G01M 10/00** $^{(2006.01)}$   **F03B 13/14** $^{(2006.01)}$
**G01L 5/00** $^{(2006.01)}$

(52) Classification Coopérative des Brevets (CPC):
**G01M 10/00; F03B 13/145; G01L 5/0061;**
Y02E 10/30

(86) Numéro de dépôt international:
**PCT/EP2019/050381**

(87) Numéro de publication internationale:
**WO 2019/149481 (08.08.2019 Gazette 2019/32)**

(54) **PROCEDE DE DETERMINATION DE LA FORCE D'EXCITATION EXERCEE PAR LA HOULE INCIDENTE SUR UN MOYEN MOBILE D'UN SYSTEME HOULOMOTEUR AU MOYEN D'UN MODELE DE LA FORCE DE TRAINEE**

VERFAHREN ZUR ERZEUGUNG DER DURCH DIE AUF EINE BEWEGLICHE VORRICHTUNG EINES WELLENENERGIESYSTEMS AUFTREFFENDEN QUELLKRAFT AUFGEBRACHTEN ANREGUNGSKRAFT UNTER VERWENDUNG EINES MODELLS DER SCHLEPPKRAFT

METHOD FOR ESTABLISHING THE EXCITATION FORCE APPLIED BY THE SWELL INCIDENT ON A MOVABLE MEANS OF A WAVE ENERGY SYSTEM USING A MODEL OF THE DRAG FORCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2018 FR 1850782**

(43) Date de publication de la demande:
**09.12.2020 Bulletin 2020/50**

(73) Titulaire: **IFP Energies nouvelles**
**92852 Rueil-Malmaison (FR)**

(72) Inventeurs:
• **NGUYEN, Hoai-Nam**
  **92852 Rueil-Malmaison (FR)**
• **TONA, Paolino**
  **92852 Rueil-Malmaison (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**FR-A1- 3 049 989      US-A1- 2017 298 899**

• **LOPES M F P ET AL: "Experimental and numerical investigation of non-predictive phase-control strategies for a point-absorbing wave energy converter", OCEAN ENGINEERING, PERGAMON, AMSTERDAM, NL, vol. 36, no. 5, 1 avril 2009 (2009-04-01), pages 386-402, XP026067007, ISSN: 0029-8018, DOI: 10.1016/J.OCEANENG.2009.01.015 [extrait le 2009-02-01]**
• **NGUYEN HOAI-NAM ET AL: "Dominant wave frequency and amplitude estimation for adaptive control of wave energy converters", OCEANS 2017 - ABERDEEN, IEEE, 19 juin 2017 (2017-06-19), pages 1-6, XP033236867, DOI: 10.1109/OCEANSE.2017.8084955**

**Description**

L'invention concerne le domaine des dispositifs pour convertir l'énergie des vagues en énergie électrique. En particulier, l'invention concerne le domaine de la détermination de la force d'excitation par la houle incidente sur un moyen mobile, notamment pour la commande d'un système houlomoteur.

Les ressources énergétiques renouvelables connaissent un fort intérêt depuis quelques années. Ces ressources sont propres, gratuites et inépuisables, autant d'atouts majeurs dans un monde rattrapé par la diminution inexorable des ressources fossiles disponibles et prenant conscience de la nécessité de préserver la planète. Parmi ces ressources, l'énergie houlomotrice, source relativement méconnue au milieu de celles largement médiatisées comme l'éolien ou le solaire, contribue à la diversification indispensable de l'exploitation des énergies renouvelables. Les dispositifs, couramment appelés appareils "houlomoteurs", sont particulièrement intéressants, car ils permettent de produire de l'électricité à partir de cette source d'énergie renouvelable (l'énergie potentielle et cinétique des vagues) sans émission de gaz à effet de serre. Ils sont particulièrement bien adaptés pour fournir de l'électricité à des sites insulaires isolés.

Par exemple, les demandes de brevet FR 2876751, et WO 2009/081042 décrivent des appareils pour capter l'énergie produite par le flot marin. Ces dispositifs sont composés d'un support flottant sur lequel est disposé un pendule monté mobile par rapport au support flottant. Le mouvement relatif du pendule par rapport au support flottant est utilisé pour produire de l'énergie électrique au moyen d'une machine de conversion de l'énergie (par exemple une machine électrique). La machine de conversion fonctionne en tant que générateur et en tant que moteur. En effet, pour fournir un couple ou une force qui entraîne le mobile, on fournit une puissance à la machine de conversion afin de mettre le mobile en résonance avec les vagues (mode moteur). En outre, pour produire un couple ou une force qui résiste au mouvement du mobile, on récupère une puissance via la machine de conversion (mode générateur).

Dans l'intention d'améliorer le rendement et donc la rentabilité des dispositifs pour convertir l'énergie des vagues en énergie électrique (systèmes houlomoteurs), il est intéressant d'estimer la force d'excitation exercée par la houle incidente sur le système houlomoteur.

La force appliquée par la houle aux dispositifs pour convertir l'énergie des vagues en énergie électrique ou d'autres formes d'énergie exploitable, couramment appelés houlomoteurs, n'est pas directement mesurable en conditions de fonctionnement normales dans un contexte industriel. Pour certains systèmes houlomoteurs, il est possible de réaliser des essais spécifiques, consistant à bloquer la partie flottante de la machine et à mesurer l'effort nécessaire pour contrer l'action de la vague (c'est-à-dire pour maintenir le flotteur immobile) à travers un ou plusieurs capteurs (de force ou de couple) placés sur la machine de conversion, appelée aussi système de prise de puissance (PTO), par exemple un générateur électrique assorti d'un dispositif permettant de transmettre le mouvement oscillatoire du moyen mobile. Selon la terminologie courante, on appelle la quantité ainsi mesurée, force d'excitation de la houle (ou vague), en la distinguant notamment de la force (et de la houle) générée par le mouvement même du flotteur (force de radiation). Durant le fonctionnement normal du flotteur, en revanche, les mêmes capteurs d'effort mesureront seulement la force appliquée par le PTO, et non pas la force d'excitation de la houle incidente.

Il serait possible, en principe, de calculer l'ensemble des forces appliquées par la houle en intégrant des mesures de pression provenant de capteurs distribués sur toute la surface, mais il s'agit là d'une solution coûteuse et peu robuste qui peut difficilement être envisagée dans un contexte industriel.

Il y a peu de travaux scientifiques dans le domaine de l'estimation en temps-réel de la force (ou du couple) d'excitation de la vague. Par exemple, on peut citer le document Peter Kracht, Sebastian Perez-Becker, Jean-Baptiste Richard, and Boris Fischer. "Performance Improvement of a Point Absorber Wave Energy Converter by Application of an Observer-Based Control: Results from Wave Tank Testing". Dans IEEE Transactions on Industry Applications, juillet 2015, qui décrit un algorithme d'estimation de la force de la houle, celui-ci est basé sur banc d'oscillateurs harmoniques indépendants et un observateur de Luenberger. Les résultats obtenus avec cette méthode montrent que les estimations sont retardées (déphasées) de manière significative par rapport à la vraie force d'excitation, ce qui est gênant notamment pour une utilisation dans le cadre du contrôle du système houlomoteur. Plus généralement, cette approche considère une plage de fréquence de fréquence fixe (choisie a priori) pour le spectre de la houle. Pour que la méthode puisse marcher dans des conditions réalistes, où le spectre est variant dans le temps, il faut prendre en compte un nombre très élevé de fréquences, ce qui rend l'approche très lourde en termes de calculs. Dans le document Bradley A Ling. "Real-Time Estimation and Prédiction of Wave Excitation Forces for Wave Energy Control Applications",publié dans ASME 2015 34th International Conférence on Ocean, Offshore and Arctic Engineering, une approche basée sur un filtre de Kalman étendu est proposée pour reconstruire le spectre en considérant la force d'excitation de la vague comme une (seule) sinusoïde dont les paramètres (amplitude, fréquence et phase) varient dans le temps. Toutefois, la méthode ne peut être efficace que pour des vagues dans une bande de fréquences très étroite.

En outre, la demande de brevet FR2973448 (US9261070) décrit une méthode de commande pour convertisseurs ponctuels oscillants dont une des étapes est l'estimation (du spectre) de la force de la houle sur le flotteur (ou du couple sur la partie mobile du convertisseur), à partir d'un ensemble de sinusoïdes et d'un observateur de Luenberger. La méthode s'apparente à celle publiée dans les documents précédemment cités, et présente a priori les mêmes désavantages.

Une autre méthode est décrite dans la demande de brevet FR 3049989 (WO 2017/174244). Cette méthode consiste à déterminer en temps réel les efforts exercés par la houle incidente sur le moyen mobile, afin d'adopter en conséquence les meilleurs réglages des stratégies de production de l'énergie électrique. La méthode est basée sur la construction d'un modèle de la force de radiation exercée sur le moyen mobile, et d'un modèle de la dynamique du système houlomoteur. Cette méthode utilise seulement des mesures de la cinématique du flotteur (position, vitesse et éventuellement accélération) et de la force appliquée par la machine de conversion, mesures normalement disponibles sur un système houlomoteur, car utilisées pour son contrôle et pour sa supervision. Ainsi, grâce aux modèles utilisés, il est possible d'estimer la force exercée par la houle pour toute plage de fréquences des vagues, tout en gardant un temps de calcul adapté à une détermination et un contrôle en temps réel.

Cette méthode donne satisfaction pour les systèmes houlomoteurs « linéaires », c'est à dire, dont le comportement dynamique est décrit de manière suffisamment précise par des équations différentielles linéaires. Néanmoins, cette méthode ne permet pas de déterminer la force de la houle de manière précise pour les système houlomoteurs « non linéaires » (avec des équations différentielles non linéaires), notamment les systèmes houlomoteurs de type à volet (« flap »), ou les systèmes houlomoteurs de type à convertisseur submergé à différentiel de pression de forme plate, ou les systèmes houlomoteurs de type machine à masse tournante tanguant en surface.

La demande de brevet US 2017/0298899 A1 décrit un contrôle optimisé d'un système houlomoteur.

Le document "LOPES M F P et L: "Experimental and numerical investigation of nonprédictive phase-control stratégies for a point-absorbing wave energy converter ", Ocean engineering, pergamon, Amsterdam, NL, vol. 36, no. 5, 1 avril 2009, pages 386-402, XP026067007, ISSN: 0029-8018," décrit une méthode de contrôle d'un système houlomoteur.

Le document "NGUYEN HOI-NAM et al. : « dominant wave frequency and amplitude estimation for adaptive control of wave energy converters », Océans 2017 - ABERDEEN, IEEE, 19 juin 2017, pages 1 - 6" décrit une méthode de contrôle d'un système houlomoteur.

Afin de pallier ces inconvénients, la présente invention consiste en un procédé de détermination en temps réel des efforts exercés par la houle incidente sur un moyen mobile d'un système houlomoteur, afin d'adopter en conséquence les meilleurs réglages des stratégies de récupération de l'énergie électrique. La méthode est basée sur la construction d'un modèle de la force de radiation exercée sur le moyen mobile, d'un modèle de la force de trainée exercée sur le moyen mobile et d'un modèle non linéaire de la dynamique du système houlomoteur. L'invention utilise seulement des mesures de la cinématique du flotteur (position, vitesse et éventuellement accélération) et de la force appliquée par la machine de conversion, mesures normalement disponibles sur un système houlomoteur, car utilisées pour son contrôle et pour sa supervision. La détermination de la force d'excitation exercée par la houle incidente sur le moyen mobile utilise ces modèles, ces mesures, et un filtre de Kalman sans parfum. Il intègre notamment un modèle de la force de trainée visqueuse et rend possible, grâce au filtre de Kalman sans parfum, d'estimer la force exercée par la houle incidente de manière précise pour tous les systèmes houlomoteurs, en particulier pour les systèmes houlomoteurs « non linéaires ». Le procédé selon l'invention est adapté pour toute plage de fréquences des vagues, tout en gardant un temps de calcul adapté à une détermination et un contrôle en temps réel.

**Le procédé selon l'invention**

La présente invention concerne un procédé de détermination d'une force d'excitation exercée par la houle sur un moyen mobile d'un système houlomoteur, ledit système houlomoteur convertissant l'énergie de la houle en énergie au moyen dudit moyen mobile coopérant avec une machine de conversion, ledit moyen mobile effectuant un mouvement par rapport à ladite machine de conversion sous l'action de la houle. Pour ce procédé, on réalise les étapes suivantes :

a) on mesure la position et la vitesse dudit moyen mobile ;
b) on mesure la force u exercée par ladite machine de conversion sur ledit moyen mobile ;
c) on construit un modèle de la force $\tau_{rad}$ de radiation exercée sur ledit moyen mobile, ledit modèle de la force de radiation reliant ladite force de radiation $\tau_{rad}$ à la vitesse dudit moyen mobile ;
d) on construit un modèle de force de trainée $\tau_d$ exercée sur ledit moyen mobile, ledit modèle de force de trainée reliant ladite force de trainée $\tau_d$ à la vitesse dudit moyen mobile ;
e) on construit un modèle de dynamique dudit système houlomoteur qui relie ladite force d'excitation $\tau_w$ exercée par la houle incidente sur ledit moyen mobile, à ladite position dudit moyen mobile, à ladite vitesse du moyen mobile, à ladite force u exercée par ladite machine de conversion sur ledit moyen mobile, à ladite force de radiation $\tau_{rad}$ exercée sur ledit moyen mobile et à ladite force de trainée $\tau_d$ exercée sur ledit moyen mobile ; et
f) on détermine ladite force d'excitation $\tau_w$ exercée par la houle incidente sur ledit moyen mobile au moyen dudit modèle de dynamique, dudit modèle de la force de radiation, dudit modèle de la force de trainée $\tau_d$, desdites position et vitesse mesurées et de ladite force u mesurée exercée par ladite machine de conversion sur ledit moyen mobile et au moyen d'un filtre de Kalman sans parfum construit à partir d'un modèle de marche aléatoire de ladite force d'excitation exercée par la houle incidente sur ledit moyen mobile.

Selon un mode de réalisation, on construit ledit modèle de dynamique dudit système houlomoteur au moyen d'une équation du type :

$I_{eq}\ddot{\delta}(t) = \tau_{hd}(t) + \tau_{rad}(t) + \tau_d(t) + \tau_w(t) - u(t)$ avec $I_{eq}$ le moment d'inertie total dudit moyen mobile (2), $\delta(t)$ l'angle de rotation dudit moyen mobile par rapport à la position d'équilibre, avec $\ddot{\delta}(t)$ l'accélération angulaire dudit moyen mobile et $\dot{\delta}(t)$ la vitesse angulaire dudit moyen mobile, $\tau_{hd}(t)$ le moment de rappel hydrostatique, $\tau_{rad}(t)$ le moment de radiation, $\tau_d(t)$ le moment de trainée, $\tau_w(t)$ le moment d'excitation de la vague, $u(t)$ le moment exercé par ladite machine de conversion sur ledit moyen mobile.

Conformément une mise en oeuvre, on détermine le moment de rappel hydrostatique $\tau_{hd}(t)$ au moyen d'une formule du type :

$$\tau_{hd}(t) = -K\delta(t)$$

où K est le coefficient de raideur hydrostatique.

Selon un aspect, on construit ledit modèle de force de radiation par une équation du type :

$\tau_{rad}(t) = -I_\infty\ddot{\delta}(t) - \tau_r(t)$ avec $I_\infty$ est le moment d'inertie ajouté à fréquence infiniment élevée et

$\tau_r(t) = \int_0^t h(t-s)\dot{\delta}(s)ds = h(t) * \dot{\delta}(t)$ , avec h la réponse impulsionnelle qui relie la vitesse du moyen mobile à l'amortissement de radiation et $\dot{\delta}(t)$ la vitesse angulaire dudit moyen mobile.

Avantageusement, on construit ledit modèle de force de trainée par une équation du type :

$$\tau_d(t) = \beta\dot{\delta}(t)\left|\dot{\delta}(t)\right|$$

où $\beta$ est le coefficient de trainée et $\dot{\delta}(t)$ la vitesse angulaire dudit moyen mobile.

Alternativement, ledit modèle de la force de trainée $F_d$ peut s'écrire par une équation de la forme :

$$F_d(t) = \beta\dot{z}(t)|\dot{z}(t)|$$

avec $\beta$ le coefficient de trainée,
et $\dot{z}$ la vitesse du moyen mobile.

Conformément à une mise en oeuvre, on détermine ladite force d'excitation $\tau_w$ exercée par la houle incidente sur ledit moyen mobile en mettant en oeuvre les étapes suivantes :

i) on initialise k=0, le vecteur d'état $x_a(0|0)=m(0)$ et l'état de la matrice de covariance, $P(0|0) = P_0$ ;
ii) à chaque instant k, on acquiert lesdites mesures de position et de vitesse dudit moyen mobile $y(k) = [\delta(k) \ \dot{\delta}(k)]$ et la mesure de ladite force exercée par ladite machine de conversion sur ledit moyen mobile $u(k)$ ; et
iii) à chaque instant k, on détermine la force d'excitation exercée par la houle incidente sur ledit moyen mobile (2) $\hat{\tau}_w(k)$ au moyen des équations suivantes :

$$\hat{\tau}_w(k) = [0 \quad 1]\hat{x}_a(k|k)$$

$$P_x(k|k) = P_x(k|k-1) - KP_y(k|k-1)K^T$$

$$K = P_{xy}(k|k-1)P_y(k|k-1)^{-1}$$

$$\hat{x}(k) = \hat{x}_a(k|k-1) + K\big(\hat{y}(k) - \hat{y}(k|k-1)\big)$$

$$P_{xy}(k|k-1) = \sum_{j=0}^{2n} W_j^c \left( \hat{x}_j(k|k-1) - x_a(k|k-1) \right) \left( \hat{y}_j(k|k-1) - y(k|k-1) \right)^T$$

$$\hat{y}(k|k-1) = \sum_{j=0}^{2n} W_j^m \hat{y}_j(k|k-1),$$

$$P_y(k|k-1) = \sum_{j=0}^{2n} W_j^c \left( \hat{y}_j(k|k-1) - y(k|k-1) \right) \left( \hat{y}_j(k|k-1) - y(k|k-1) \right)^T + R$$

$$\hat{y}_j(k|k-1) = C_a \hat{x}_j(k|k-1)$$

$$\hat{x}(k|k-1) = \sum_{j=0}^{2n} W_j^m \hat{x}_j(k|k-1),$$

$$P_x(k|k-1) = \sum_{j=0}^{2n} W_j^c \left( \hat{x}_j(k|k-1) - x_a(k|k-1) \right) \left( \hat{x}_j(k|k-1) - x_a(k|k-1) \right)^T + Q.$$

$$\hat{x}_j(k|k-1) = A_a x_j(k-1) + f_a \left( x_j(k-1) \right) + B_a u(k-1), \qquad j = 0, 1, \ldots, 2n$$

$$x_0(k-1) = \hat{x}_a(k-1|k-1),$$

$$x_i(k-1) = \hat{x}_a(k-1|k-1) + \sqrt{n+\lambda}\, S_i(k-1), i = 1, 2, \ldots, n$$

$$x_{i+n}(k-1) = \hat{x}_a(k-1|k-1) - \sqrt{n+\lambda}\, S_i(k-1), i = 1, 2, \ldots, n$$

où $S_i(k - 1)$ est la i-ème colonne de la racine carrée matricielle de $P_x(k - 1|k - 1)$, soit

$$P_x(k|k-1) = S(k-1)^T S(k-1)$$

$x_a(k)$ le vecteur d'état inconnu $x_a(k) = \begin{bmatrix} x(k) \\ \tau_w(k) \end{bmatrix}$, $A_a, B_a, C_a, D_a$ des matrices de la réalisation d'état, P la matrice de covariance du vecteur d'état, Q et R des matrices de calibration.

Selon un mode de réalisation, on commande ledit système houlomoteur en fonction de ladite force déterminée d'excitation $\tau_w$ exercée par la houle incidente sur ledit moyen mobile.

De manière avantageuse, ledit système houlomoteur est un système houlomoteur de type à convertisseur submergé à différentiel de pression de forme plate, de type machine à masse tournante tanguant en surface ou du type système houlomoteur à volet.

En outre, l'invention concerne un système houlomoteur. Il comprend des moyens de mesure et de commande, notamment des moyens de commande informatique, mettant en oeuvre un procédé selon l'une des caractéristiques précédentes.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre un système houlomoteur de type à volet selon un mode de réalisation de l'invention.

La figure 2 illustre une estimation de la force exercée par la houle au moyen d'un procédé selon l'art antérieur pour une vague régulière.

La figure 3 illustre une estimation de la force exercée par la houle au moyen d'un procédé selon un mode de réalisation de l'invention pour une vague régulière.

La figure 4 illustre une estimation de la force exercée par la houle au moyen d'un procédé selon un mode de réalisation de l'invention pour une vague irrégulière.

## Description détaillée de l'invention

La présente invention concerne un procédé de détermination de la force d'excitation exercée par la houle incidente sur un moyen mobile d'un système houlomoteur, appelée aussi force d'excitation de la houle ou de la vague. Un système houlomoteur est un système qui convertit l'énergie de la houle en énergie récupérable, en particulier en énergie électrique. Un système houlomoteur comporte généralement un moyen mobile, également appelé volet (« flap »), pendule ou flotteur, qui a un mouvement oscillatoire sous l'action de la houle. Le moyen mobile coopère avec une machine de conversion, appelée aussi système de prise de puissance (PTO de l'anglais « power take off »), qui comporte dans la plupart des cas un générateur électrique couplé à un dispositif permettant d'adapter la transmission du mouvement oscillatoire, pour convertir le mouvement du moyen mobile en énergie récupérable. Dans certains cas, la machine de conversion peut agir en tant que moteur en générant un effort sur le moyen mobile. En effet, pour récupérer une puissance via la machine de conversion, on produit un couple ou une force qui résiste au mouvement du mobile (mode générateur). En outre, si la machine de conversion le permet, on peut fournir une puissance à la machine de conversion pour fournir un couple ou une force qui entraîne le mobile afin de l'aider à se mettre en résonance avec les vagues (mode moteur).

Le procédé selon l'invention est adapté à tout type de système houlomoteur avec au moins un moyen mobile, par exemple ceux décrits dans la demande de brevet FR2973448 (US9261070). Le procédé de commande selon l'invention peut également être appliqué à un système houlomoteur appartenant à la catégorie de systèmes houlomoteurs avec colonnes d'eau oscillantes (OWC de l'anglais Oscillating Water Column). Toutefois, le procédé selon l'invention est particulièrement adapté à un système houlomoteur non linéaire, par exemple du type à volet (« flap »), de type à convertisseur submergé à différentiel de pression de forme plate, ou de type machine à masse tournante tanguant en surface.

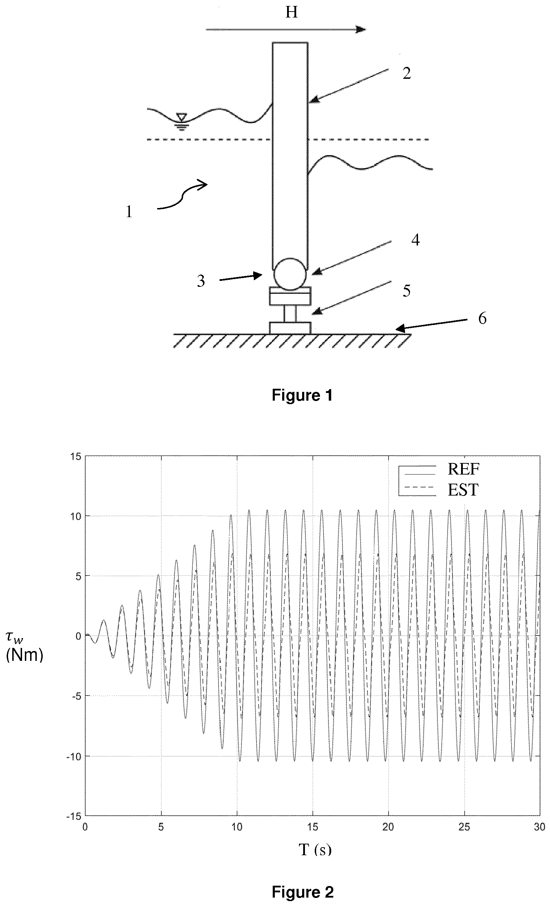

La figure 1 illustre, de manière schématique, un exemple non limitatif de système houlomoteur 1 à volet. Le système houlomoteur 1 comporte un moyen mobile 2, qui a la forme d'un volet sensiblement vertical (la houle est représentée de manière schématique par deux traits courbes et la direction de la houle est représentée par la flèche H). Le volet 2 possède une partie immergée et une partie émergée. Le moyen mobile 2 coopère, au moyen d'une articulation 4, avec une machine de conversion basée sur un générateur électrique 3, qui est, dans ce cas, un générateur rotatif. L'articulation 4 permet un mouvement d'oscillation rotatif du volet 2 autour d'un axe horizontal par rapport à un support 5 qui est fixe par rapport au fond de la mer 6.

Dans la suite de la description et pour les revendications, les termes vagues, flots marins, et houle sont considérés comme équivalents.

De plus, dans la description et pour les revendications, le terme force désigne un effort ou un couple. De la même manière, les termes position, vitesse et accélérations désignent à la fois des valeurs « linéaires » ou « angulaires », les valeurs « linéaires » pouvant être associées aux efforts, et les valeurs « angulaires » pouvant être associées aux couples. Dans la suite de la description, seul le cas relatif aux couples sera illustré, mais le cas des efforts peut se déduire par transposition des équations dans un référentiel orthogonal.

En outre, pour une meilleure compréhension, les différents modèles sont représentés en une seule dimension, toutefois, le procédé selon l'invention est adapté à des modèles à plusieurs dimensions, pour des systèmes ayant plusieurs degrés de liberté dans leur mouvement.

Le procédé selon l'invention comporte les étapes suivantes :

1) mesure de la position et de la vitesse du moyen mobile
2) mesure de la force exercée par la machine de conversion (ou PTO)
3) construction du modèle de force de radiation
4) construction d'un modèle de force de trainée
5) construction du modèle de dynamique
6) détermination de la force d'excitation de la houle incidente
7) (étape facultative) commande du système houlomoteur

Les étapes 3) et 4) peuvent être réalisées dans cet ordre, dans l'ordre inverse ou simultanément.

Les étapes du procédé peuvent être mise en oeuvre par un équipement informatique (ou calculateur). Cet équipement peut comprendre des moyens de traitement de données, et avantageusement des moyens de stockage de données.

Les moyens de traitement de données sont configurés pour implémenter :

- les mesures de position et de vitesse du moyen mobile,
- la mesure de la force exercée par la machine de conversion,
- la construction des modèles de force de radiation, de force de trainée et du modèle dynamique, et
- la détermination de la force d'excitation de la houle incidente.

### 1) Mesure de la position et de la vitesse du moyen mobile

Lors de cette étape, la position et la vitesse du moyen mobile sont mesurées. La position correspond au mouvement (par exemple distance ou angle) par rapport à la position d'équilibre du moyen mobile. Ces mesures peuvent être réalisées au moyen de capteurs, généralement implémentés sur un système houlomoteur pour son contrôle et/ou sa supervision.

Selon une mise en oeuvre de l'invention, lors de cette étape, on peut également mesurer l'accélération du moyen mobile, et l'utiliser pour estimer la vitesse, ou bien l'utiliser directement dans les modèles mis en oeuvre par le procédé selon l'invention. Par exemple, l'accélération peut être mesurée au moyen d'un accéléromètre placé sur le moyen mobile.

### 2) Mesure de la force exercée par la machine de conversion (PTO)

Lors de cette étape, on mesure la force (l'effort ou le cas échéant le couple) exercée par la machine de conversion PTO sur le moyen mobile. Cette mesure peut être réalisée au moyen d'un capteur, qui peut être un capteur d'effort ou un capteur de couple. Ce type de capteur est souvent installé, ou peut être facilement installé dans les systèmes houlomoteurs, pour leur contrôle et/ou leur supervision. Alternativement, la mesure peut être remplacée par une estimation réalisée à partir de la consigne de force (ou de couple) envoyée au PTO.

Pour l'exemple de système houlomoteur illustré sur la figure 1, un capteur de couple peut être disposé au niveau de l'articulation 4 (ou du générateur électrique 3).

### 3) Construction d'un modèle de force de radiation

Lors de cette étape, on construit un modèle de la force de radiation exercée sur le moyen mobile. Selon la théorie linéaire des vagues (comme décrit par exemple dans le document Faines J, Kurniawan A. "Fundamental formulae for wave-energy conversion". R. Soc. open sci. 2: 140305, 2005, http://dx.doi.org/10.1098/rsos.140305), la force de radiation résulte de l'oscillation d'un corps immergé (donc dépend du mouvement du moyen mobile), tandis que la force d'excitation, résultant de la présence même d'un corps dans l'eau, ne dépend pas du mouvement du corps immergé, mais de la vague incidente. En l'absence de houle incidente, la force de radiation amortit l'oscillation résiduelle du corps immergé jusqu'à l'arrêter. Il est important de noter que, bien que la théorie linéaire permette de relier la force d'excitation à l'élévation de la vague incidente à travers un modèle linéaire (dans le domaine fréquentiel ou temporel), en pratique on ne peut pas s'en servir pour calculer la force d'excitation en ligne, même si c'était possible de mesurer l'élévation de la vague au centre de gravité du moyen mobile comme le requiert la théorie. En effet, la relation linéaire entre élévation de la vague et force d'excitation est non-causale, ce qui veut dire qu'on ne peut pas calculer la force d'excitation à un instant donné sans connaître l'élévation de la vague dans les instants futurs (le calcul peut en revanche être fait hors ligne, une fois la vague passée). Dans un contexte de contrôle en temps-réel, la force d'excitation ne peut donc être considérée que comme une force exogène totalement inconnue agissant sur le flotteur. En revanche, toujours selon la théorie linéaire des vagues, la force de radiation est reliée au mouvement du flotteur, et plus précisément à son accélération et à sa vitesse par un modèle linéaire (dans le domaine fréquentiel ou temporel) causal. Elle peut donc être calculée en ligne en utilisant les mesures d'accélération et vitesse courantes (et passées pour la vitesse).

Selon une mise en oeuvre de l'invention, on construit ledit modèle de la force $\tau_{rad}(t)$ de radiation par une équation du type :

$$\tau_{rad}(t) = -I_\infty \ddot{\delta}(t) - \tau_r(t)$$

avec $\tau_r(t) = \int_0^t h(t-s)\dot{\delta}(s)ds = h(t) * \dot{\delta}(t)$ la composante de ladite force $\tau_{rad}$ de radiation qui dépend de la vitesse (courante et passée) du moyen mobile, que l'on peut appeler amortissement de radiation,

$\ddot{\delta}$ l'accélération angulaire du moyen mobile,

$I_\infty$ le moment d'inertie ajouté à la fréquence infiniment élevée, que l'on peut obtenir par des codes de calcul BEM (« Boundary Element Method » signifiant méthode des éléments de frontières), tels que WAMIT ® (WAMIT, USA), ou Nemoh ® (Ecole Centrale de Nantes, France), à partir de la géométrie du moyen mobile,

$\dot{\delta}$ la vitesse angulaire du moyen mobile,

$h$ la réponse impulsionnelle qui relie la vitesse du moyen mobile à l'amortissement de radiation, dont les coefficients s'obtiennent à partir des paramètres hydrodynamiques du moyen mobile calculés par les mêmes codes de calcul BEM.

La construction de ce modèle permet une détermination à tout instant de la force de radiation, avec un temps de calcul limité. Ainsi, la détermination de la force exercée par la houle peut être déterminée à tout instant avec un temps de calcul court.

<u>4) Construction d'un modèle de la force de trainée</u>

Lors de cette étape, on construit un modèle de force de trainée exercée sur le moyen mobile. La force de trainée correspond aux frottements visqueux sur le moyen mobile du système houlomoteur. Il s'agit d'un modèle non linéaire, pouvant dépendre de la vitesse du moyen mobile. La force de trainée (due à des frottements visqueux) est souvent considérée négligeable pour les systèmes houlomoteurs de type convertisseurs ponctuels oscillants et est généralement exclue de leur modélisation. Ce n'est pas le cas, toutefois, pour les systèmes houlomoteurs de type à volet (« flaps »), ni pour des machines telles que des convertisseurs submergés à différentiel de pression de forme plate ni pour des machines à masse tournante tanguant en surface, entre autres.

Selon un mode de réalisation de l'invention, pour un système houlomoteur ayant un mouvement rotatif, le modèle de la force de trainée $\tau_d$ peut s'écrire par une équation de la forme :

$$\tau_d(t) = \beta \dot{\delta}(t)\left|\dot{\delta}(t)\right|$$

avec $\beta$ le coefficient de trainée, ce coefficient peut être déterminé par des essais expérimentaux du système houlomoteur ou par des simulations numériques de type CFD ( de l'anglais Computational Fluid Dynamics, correspondant à Mécanique des fluides numérique)

et $\dot{\delta}$ la vitesse angulaire du moyen mobile.

Selon une variante de réalisation de l'invention, pour un système houlomoteur ayant un mouvement de translation, le modèle de la force de trainée $F_d$ peut s'écrire par une équation de la forme :

$$F_d(t) = \beta \dot{z}(t)|\dot{z}(t)|$$

avec $\beta$ le coefficient de trainée, ce coefficient peut être déterminé par des essais expérimentaux du système houlomoteur ou par des simulations numériques de type CFD ( de l'anglais Computational Fluid Dynamics, correspondant à Mécanique des fluides numérique)

et $\dot{z}$ la vitesse du moyen mobile.

La construction de ce modèle permet une détermination précise de la force de trainée. Ainsi la détermination de la force exercée par la houle sur le moyen mobile peut être précise, car elle ne néglige pas la force de trainée.

<u>5) Construction du modèle de dynamique du système houlomoteur</u>

Lors de cette étape, on construit un modèle de dynamique du système houlomoteur. On appelle modèle de dynamique un modèle qui relie la force d'excitation exercée par la houle incidente sur le moyen mobile, la force de radiation exercée sur le moyen mobile, la force de rappel hydrostatique exercée sur le moyen mobile, la force exercée par la machine de conversion sur le moyen mobile, à la position et la vitesse du moyen mobile. Ce type de modèle permet d'obtenir des résultats représentatifs du comportement du système houlomoteur, si les mouvements ne sont pas trop grands.

Avantageusement, le modèle de dynamique est obtenu par application du principe fondamental de la dynamique (deuxième loi de Newton) au niveau du moyen mobile.

Selon une mise en oeuvre de l'invention, pour lequel on considère les efforts, on peut construire le modèle de dynamique du système houlomoteur par une équation du type :

$$I_{eq}\ddot{\delta}(t) = \tau_{hd}(t) + \tau_{rad}(t) + \tau_d(t) + \tau_w(t) - u(t)$$

avec $I_{eq}$ le moment d'inertie du moyen mobile,
$\ddot{\delta}$ l'accélération angulaire du moyen mobile,
$\tau_w$ le couple d'excitation exercé par la houle incidente sur le moyen mobile,
$\tau_{rad}$ le couple de radiation exercé sur le moyen mobile,
$\tau_{hd}$ le couple de rappel hydrostatique exercé sur le moyen mobile,
$\tau_d$ le couple de trainée exercé sur le moyen mobile, et
$u$ le couple exercé par la machine de conversion sur le moyen mobile.

Ce modèle traduit un mouvement de rotation autour d'un axe horizontal (typique pour le système houlomoteur de la figure 1). Ce modèle est dérivé de la théorie linéaire des vagues.

Conformément à une première variante de réalisation, la force de rappel hydrostatique exercée sur le moyen mobile peut être approximée par une fonction linéaire de la position z définie par rapport à la position d'équilibre. Dans ce cas, la force de rappel hydrostatique peut s'écrire par une fonction du type : $\tau_{hd}(t) = -K\delta(t)$ avec $\delta$ la position angulaire du moyen mobile définie par rapport à sa position d'équilibre et $K$ le coefficient de raideur hydrostatique. Ainsi, la force de rappel hydrostatique peut être calculée à partir d'un modèle simple si l'on dispose de la mesure de la position $\delta$. Cette fonction est particulièrement adaptée pour les petits déplacements $\delta$.

Selon une mise en oeuvre de l'invention, pour lequel on considère les efforts, on peut construire le modèle de dynamique du système houlomoteur par une équation du type :

$$M\ddot{z}(t) = F_{ex}(t) + F_{hd}(t) + F_{rad}(t) + F_d(t) - F_u(t)$$

avec M la masse du moyen mobile,
$\ddot{z}$ l'accélération du moyen mobile,
$F_{ex}$ la force d'excitation exercée par la houle incidente sur le moyen mobile,
$F_{rad}$ la force de radiation exercée sur le moyen mobile,
$F_{hd}$ la force de rappel hydrostatique exercée sur le moyen mobile,
$F_d$ la force de trainée exercée sur le moyen mobile, et
$F_u$ la force exercée par la machine de conversion sur le moyen mobile.

Ce modèle traduit un mouvement de translation verticale (typique des flotteurs ayant un mouvement de pillonement). Ce modèle est dérivé de la théorie linéaire des vagues.

Ce modèle est le « miroir » du modèle pour lequel on considère les couples ; les différents termes du modèle sont de même nature.

Selon un mode de réalisation de l'invention, la force de rappel hydrostatique et/ou le couple de rappel hydrostatique peuvent être approximés par une fonction linéaire, ou par une fonction affine par morceaux.

6) Détermination de la force d'excitation exercée par la houle incidente

Lors de cette étape, on détermine, en temps réel, la force d'excitation exercée par la houle incidente sur le moyen mobile au moyen :

- des mesures de position et de vitesse (et éventuellement d'accélération) du moyen mobile déterminées à l'étape 1),
- de la mesure de la force exercée par la machine de conversion PTO sur le moyen mobile déterminée à l'étape 2),
- du modèle de la force de radiation déterminé à l'étape 3),
- du modèle de la force de trainée déterminé à l'étape 4), et
- du modèle de dynamique du système houlomoteur déterminé à l'étape 5).

Selon l'invention, on détermine la force d'excitation exercée par la houle incidente sur le moyen mobile au moyen d'un observateur d'état basé sur un filtre de Kalman sans parfum (UKF pour « Unscented Kalman Filter ») construit à partir d'un modèle de marche aléatoire de la force d'excitation exercée par la houle incidente sur le moyen mobile. Le filtre de Kalman sans parfum permet de prendre en compte les non linéarités des modèles, en particulier du modèle de la force de trainée.

On rappelle qu'un observateur d'état, ou un estimateur d'état, est, en automatique et en théorie des systèmes, une extension d'un modèle représenté sous forme de représentation d'état. Lorsque l'état du système n'est pas mesurable, on construit un observateur qui permet de reconstruire l'état à partir d'un modèle.

Un filtre UKF est basé sur la théorie de la transformation « non parfumée », qui permet d'obtenir un estimateur pour un système non linéaire sans avoir besoin de le linéariser au préalable pour l'application du filtre. Le filtre UKF utilise une distribution statistique de l'état qui est propagée à travers les équations non linéaires. Un tel filtre présente l'avantage de permettre une stabilité, donc une robustesse de l'estimation.

Pour ce mode de réalisation, préalablement à cette étape, on connaît donc :

- les mesures de position $\delta$, et de vitesse $\dot{\delta}$ du moyen mobile,
- la mesure de la force u exercée par la machine de conversion PTO sur le moyen mobile,
- le modèle de la force de radiation $\tau_{rad}(t) = -I_\infty \ddot{\delta}(t) - \tau_r(t)$ avec

$$\tau_r(t) = \int_0^t h(t - s)\dot{\delta}(s)ds = h(t) * \dot{\delta}(t),$$

- le modèle de la force de trainée $\tau_d(t) = \beta\dot{\delta}(t)|\dot{\delta}(t)|$, et
- le modèle de dynamique du système houlomoteur

$$I_{eq}\ddot{\delta}(t) = \tau_{hd}(t) + \tau_{rad}(t) + \tau_d(t) + \tau_w(t) - u(t).$$

Dans cette approche, le problème d'estimation de la force d'excitation de la houle est transformé en un problème classique d'estimation d'état (qui peut être résolu avec un filtre de Kalman sans parfum), en exprimant la dynamique de la force d'excitation de la houle par un modèle de marche aléatoire. L'avantage principal de cette méthode est la prise en compte d'incertitudes permettant de prendre en compte les bruits de mesure et les dynamiques non modélisées.

En remplaçant dans l'équation qui décrit le mouvement du moyen mobile

$$I_{eq}\ddot{\delta}(t) = \tau_{hd}(t) + \tau_{rad}(t) + \tau_d(t) + \tau_w(t) - u(t)$$

les expressions pour la force de rappel hydrostatique (avec le modèle linéaire), le modèle de la force de radiation, et le modèle de la force de trainée

$$\tau_{hd}(t) = -K\delta(t)$$

$$\tau_{rad}(t) = -I_\infty \ddot{\delta}(t) - \tau_r(t)$$

$$\tau_d(t) = \beta\dot{\delta}(t)|\dot{\delta}(t)|$$

on obtient le modèle non linéaire suivant :

$$(I_{eq} + I_\infty)\ddot{\delta}(t) + \beta\dot{\delta}(t)|\dot{\delta}(t)| + K\delta(t) = \tau_w(t) + \tau_r(t) - u(t).$$

Cette équation peut être mise sous forme d'état, en définissant

$$\begin{cases} x_1(t) = \delta(t) \\ x_2(t) = \dot{\delta}(t) \end{cases}$$

ce qui permet d'écrire le modèle précédent sous forme de représentation d'état

$$\begin{cases} \dot{x}_1(t) = x_2(t) \\ \dot{x}_1(t) = \dfrac{1}{I_{eq} + I_\infty}\left(-Kx_1(t) - \beta x_2(t)|x_2(t)| - \tau_r(t) + \tau_w(t) - u(t)\right) \end{cases}$$

Ce système d'équation contient le terme intégral

$$\tau_r(t) = \int_0^t h(t-s)\dot{\delta}(s)ds = h(t) * \dot{\delta}(t)$$

que l'on peut considérer comme un système linéaire dont l'entrée est $\dot{\delta}(t)$ et la sortie $\tau_r(t)$. Avec la méthode de Prony, ce système peut alors être transformé en la représentation d'état équivalente :

$$\begin{cases} \dot{x}_r(t) = A_r x_r(t) + B_r \dot{\delta}(t) \\ \tau_r(t) = C_r x_r(t) + D_r \dot{\delta}(t) \end{cases}$$

ou

$$\begin{cases} \dot{x}_r(t) = A_r x_r(t) + B_r x_2(t) \\ \tau_r(t) = C_r x_r(t) + D_r x_2(t) \end{cases}$$

où $x_r$ est un état interne (inaccessible) n'ayant pas de signification physique particulière et $(A_r,\ B_r,\ C_r,\ D_r)$ sont les matrices de la réalisation d'état.

En combinant les deux représentations d'état, on obtient

$$\begin{cases} \dot{x}_1(t) = x_2(t) \\ \dot{x}_1(t) = \dfrac{1}{I_{eq} + I_\infty}\left(-Kx_1(t) - D_r x_2(t) - C_r x_r(t) - \beta x_2(t)|x_2(t)| + \tau_w(t) - u(t)\right) \\ \dot{x}_r(t) = B_r x_2(t) + A_r x_r(t) \end{cases}$$

ou, de manière équivalente

$$\begin{cases} \dot{x}(t) = A_c x(t) + f_c(x(t)) + B_c(\tau_w(t) - u(t)) \\ y(t) = C_c x(t) \end{cases}$$

où

$$x(t) = [x_1(t) \quad x_2(t) \quad x_r^T(t)]^T$$
$$y = \begin{bmatrix} x_1(t) \\ x_2(t) \end{bmatrix}$$

et

$$A_c = \begin{bmatrix} 0 & 1 & 0 \\ -\dfrac{K}{I_{eq} + I_\infty} & -\dfrac{D_r}{I_{eq} + I_\infty} & -\dfrac{C_r}{I_{eq} + I_\infty} \\ 0 & B_r & A_r \end{bmatrix}, \qquad f_c(x(t)) = \begin{bmatrix} 0 \\ -\dfrac{\beta}{I_{eq} + I_\infty}x_2(t)|x_2(t)| \\ 0 \end{bmatrix}$$

$$B_c = \begin{bmatrix} 0 \\ \dfrac{1}{I_{eq} + I_\infty} \\ 0 \end{bmatrix}, \qquad C_c = \begin{bmatrix} 1 & 0 & 0 \\ 0 & 1 & 0 \end{bmatrix}$$

A cause du terme $f_c(x(t))$, le système est non linéaire. Le système a deux entrées, $\tau_w(t)$ et $u(t)$, et deux sorties $x_1(t) = \delta(t)$ et $x_2(t) = \dot{\delta}(t)$. L'entrée $\tau_w(t)$ n'est pas mesurable et est inconnue. Le problème à résoudre est de l'estimer à partir des quantités mesurées $u(t)$ (moment appliqué par la machine de conversion PTO), $\delta(t)$ et $\dot{\delta}(t)$ (position et vitesse angulaire de la partie mobile).

Si le mouvement principal du système houlomoteur était un mouvement de translation et le problème était d'estimer la force d'excitation de la vague, les mêmes développements s'appliquent en remplaçant position et vitesse angulaires par des positions et vitesses et tous les moments par des forces.

Pour réaliser l'estimation, dans un premier temps on discrétise le système d'état ci-dessus (car les mesures sont échantillonnées et l'algorithme d'estimation est exécuté par un calculateur), avec la méthode d'Euler. Ce qui donne, pour une période d'échantillonnage donnée $T_s$ :

$$\begin{cases} x(k+1) = A_d x(k) + f_d\big(x(k)\big) + B_d \tau_w(k) - B_d u(k) \\ y(k) = C_d x(k) \end{cases}$$

où $A_d = I + T_s$, $f_d(x(k)) = T_s f_c(x(k))$, $B_d = T_s B_c$, $C_d = C_c$ et $I$ est la matrice identité de dimensions appropriées.

Pour estimer le moment d'excitation $\tau_w(k)$, on la considère comme un état, en introduisant un modèle mathématique qui relie $\tau_w(k)$ et $\tau_w(k+1)$, en l'occurrence

$$\tau_w(k+1) = \tau_w(k) + \epsilon_m(k)$$

où $\varepsilon_m(k)$ décrit la variation de $\tau_w(k)$ et est considéré comme un nombre aléatoire. En d'autres termes, ce modèle suppose qu'à chaque instant k, le moment d'excitation s'éloigne d'un pas (d'une quantité) aléatoire de sa valeur précédente, et que ces pas sont distribués indépendamment et identiquement en taille.

On couple ce modèle de marche aléatoire de la force d'excitation à un modèle plus réaliste de la dynamique de la partie mobile

$$\begin{cases} x(k+1) = A_d x(k) + f_d\big(x(k)\big) + B_d \tau_w(k) - B_d u(k) + \epsilon_x(k) \\ y(k) = C_d x(k) + v(k) \end{cases}$$

où $\varepsilon_x(k)$ représente les dynamiques non modélisées (frottements du PTO, nonlinéarité hydrostatique, ...) et $v(k)$ décrit les bruits de mesure sur la position et la vitesse du flotteur.

En combinant le modèle de marche aléatoire de la force d'excitation et dynamique non linéaire de la partie mobile, on obtient le système augmenté

$$\begin{cases} x(k+1) = A_d x(k) + f_d\big(x(k)\big) + B_d \tau_w(k) - B_d u(k) + \epsilon_x(k) \\ w(k+1) = \tau_w(k) + \epsilon_m(k) \\ y(k) = C_d x(k) + v(k) \end{cases}$$

ou, de manière équivalente,

$$\begin{cases} x_a(k+1) = A_a x_a(k) + f_a\big(x_a(k)\big) + B_a u(k) + \epsilon(k) \\ y(k) = C_a x_a(k) + v(k) \end{cases}$$

où

$$x_a(k) = \begin{bmatrix} x(k) \\ \tau_w(k) \end{bmatrix}, f_a(x_a(k)) = \begin{bmatrix} f_d(x(k)) \\ 0 \end{bmatrix}, \ \epsilon(k) = \begin{bmatrix} \epsilon_x(k) \\ \epsilon_m(k) \end{bmatrix}$$

et

$$A_a = \begin{bmatrix} A_d & B_d \\ 0 & 1 \end{bmatrix}, B_a = \begin{bmatrix} -B_d \\ 0 \end{bmatrix}, C_a = \begin{bmatrix} C_d & 0 \end{bmatrix}$$

Ainsi, le problème d'estimer $\tau_w(k)$, devient un problème d'estimation d'état.

Une manière d'estimer le vecteur d'état inconnu $x_a(k)$, en prenant en compte des informations sur $\varepsilon(k)$ et $v(k)$, est d'appliquer l'algorithme du filtre de Kalman (KF). Dans le procédé proposé, le filtre de Kalman sans parfum (UKF) est utilisé afin de traiter la non linéarité du système. L'UKF est généralement plus robuste et précis que le filtre de Kalman étendu (EKF), qui traite la non linéarité en la linéarisant. De plus, dans ce cas de figure, la présence du terme de trainée, dont la dérivée n'est pas continue, rend l'EKF inapplicable.

Comme l'EKF, l'UKF réalise l'estimation à travers deux étapes, prédiction d'état et correction des mesures, excepté que ces deux étapes sont précédées d'une étape préalable pour le calcul des « points sigma ». Les points sigma sont un ensemble d'échantillons calculés de manière à pouvoir propager de manière exacte les informations de moyenne et de variance dans l'espace d'une fonction non linéaire.

Conformément à une mise en oeuvre de l'invention, on peut adopter les hypothèses suivantes :

- l'état initial $x_a(0)$ est un vecteur aléatoire de moyenne m(0) = $E[x_a(0)]$ et covariance $P(0) = E[(x_a(0) - m(0))(x_a(0) - m(0))^T]$ ;
- $\varepsilon(k)$ et $v(k)$ sont des bruits gaussiens avec matrices de covariance Q et R, respectivement ;

et les notations suivantes :

- $\hat{x}_a(k|k$ - $1)$ est l'estimation de $x_a(k)$ à partir des mesures jusqu'au temps $k$ - 1, soit $y(k$ - 1), $y(k$ - 2), ... et $u(k$ - 1), $u(k$ - 2), ...
- $\hat{x}_a(k|k)$ est l'estimation de $x_a(k)$ à partir des mesures jusqu'au temps $k$, soit $y(k)$, $y(k$ - 1), ... et $u(k)$, $u(k$ - 1), ...
- $P_x(k|k$ - 1) est la matrice de covariance de $x_a(k)$ à partir des mesures jusqu'au temps $k$ - 1, soit $y(k$ - 1), $y(k$ - 2), ... et $u(k$ - 1), $u(k$ - 2), ...
- $P_x(k|k)$ est la matrice de covariance de $x(k)$ à partir des mesures jusqu'au temps $k$, soit $y(k)$, $y(k$ - 1), ... et $u(k)$, $u(k$ - 1), ...

Pour cette mise en oeuvre, les trois étapes de la méthode UKF peuvent être :

*1. Calcul des points sigma*

Soient

$$W_0^m = \frac{\lambda}{n+\lambda},$$

$$W_0^c = \frac{\lambda}{n+\lambda} + (1 - \alpha^2 + \gamma),$$

$$W_j^m = W_j^c = \frac{\lambda}{2(n+\lambda)}, \ j = 1,2, ..., 2n$$

où $\lambda = (\alpha^2$ - 1)$n$ est un paramètre de mise à l'échelle, $n$ est la dimension de l'état $x_a(k)$, $\alpha$ est un paramètre qui détermine la dispersion des points sigma autour de $x(k$ - 1$|k$ - 1) et auquel on donne généralement une valeur positive petite, par exemple $10^{-3}$, $\gamma$ est un paramètre utilisé pour incorporer la connaissance a priori de la distribution de $x$ : pour une distribution gaussienne, $\gamma = 2$ est optimal.

Au temps $k$ - 1, on considère le choix suivant de points sigma (ensemble de points qui encode de manière exacte les informations de moyenne et variance) :

13

$$x_0(k-1) = \hat{x}_a(k-1|k-1),$$

$$x_i(k-1) = \hat{x}_a(k-1|k-1) + \sqrt{n+\lambda}\, S_i(k-1), i = 1,2,\ldots,n$$

$$x_{i+n}(k-1) = \hat{x}_a(k-1|k-1) - \sqrt{n+\lambda}\, S_i(k-1), i = 1,2,\ldots,n$$

où $S_i(k-1)$ est la i-ème colonne de la racine carrée matricielle de $P_x(k-1|k-1)$, soit

$$P_x(k|k-1) = S(k-1)^T S(k-1)$$

*2. Mise à jour des prédictions*

Chaque point sigma est propagé à travers le modèle non linéaire qui représente l'évolution des états :

$$\hat{x}_j(k|k-1) = A_a x_j(k-1) + f_a\left(x_j(k-1)\right) + B_a u(k-1), \qquad j = 0,1,\ldots,2n$$

La moyenne et la covariance de $\hat{x}_a(k|k-1)$, la prédiction de $x_a(k|k-1)$, sont calculées comme

$$\hat{x}(k|k-1) = \sum_{j=0}^{2n} W_j^m \hat{x}_j(k|k-1),$$

$$P_x(k|k-1) = \sum_{j=0}^{2n} W_j^c \left(\hat{x}_j(k|k-1) - x_a(k|k-1)\right)\left(\hat{x}_j(k|k-1) - x_a(k|k-1)\right)^T + Q.$$

Les états prédits $\hat{x}_j(k|k-1)$ sont utilisés dans l'équation d'état de sortie, ce qui donne :

$$\hat{y}_j(k|k-1) = C_a \hat{x}_j(k|k-1)$$

La moyenne et la covariance de $\hat{y}(k|k-1)$ sont calculées comme

$$\hat{y}(k|k-1) = \sum_{j=0}^{2n} W_j^m \hat{y}_j(k|k-1),$$

$$P_y(k|k-1) = \sum_{j=0}^{2n} W_j^c \left(\hat{y}_j(k|k-1) - y(k|k-1)\right)\left(\hat{y}_j(k|k-1) - y(k|k-1)\right)^T + R$$

tandis que la covariance croisée entre $\hat{x}_a(k|k-1)$ et $\hat{y}(k|k-1)$ est :

$$P_{xy}(k|k-1) = \sum_{j=0}^{2n} W_j^c \left(\hat{x}_j(k|k-1) - x_a(k|k-1)\right)\left(\hat{y}_j(k|k-1) - y(k|k-1)\right)^T$$

*3. Mise à jour à partir des mesures*

Comme dans le filtre de Kalman linéaire, l'estimation finale de l'état est obtenue en corrigeant la prédiction avec une rétroaction sur l'erreur de prédiction sur la sortie (mesurée) :

$$\hat{x}(k) = \hat{x}_a(k|k-1) + K\left(\hat{y}(k) - \hat{y}(k|k-1)\right)$$

où le gain K est donné par

$$K = P_{xy}(k|k-1)P_y(k|k-1)^{-1}$$

La covariance a posteriori de l'estimation est mise à jour avec la formule suivante :

$$P_x(k|k) = P_x(k|k-1) - KP_y(k|k-1)K^T$$

Les règles suivantes sont utilisées pour choisir les matrices $P_0$ (covariance de l'état initial) et R :

- Si l'état initial $x_a(k)$ au temps $k = 0$ est bien connu, c.-à-d. m(0) $\approx x_a(0)$, alors $P_0^{-1}$ est grand ;
- S'il y a beaucoup de bruit dans les mesures $y(k)$, alors $R$ est petit.

Il est plus complexe de choisir $Q$. On le prend généralement sous forme diagonale, comme il suit

$$Q = \begin{bmatrix} Q_x & 0 \\ 0 & Q_m \end{bmatrix}$$

avec $Q_m \gg Q_x$.

Le procédé basé sur l'UKF et sur le modèle de marche aléatoire de la force de la vague selon cette mise en oeuvre peut être résumé comme il suit :

- On initialise $k = 0$, le vecteur d'état $\hat{x}_a(0|0)$=m(0) et l'état de la matrice de covariance, $P(0|0) = P_0$
- À chaque instant $k$ :

    - on utilise :

        - les mesures de la position et de la vitesse du moyen mobile $y(k) = [\dot{\delta}(k) \ \ddot{\delta}(k)]$et de la force exercée par le PTO sur le moyen mobile $u(k)$
        - les résultats des estimations du pas précédent $\hat{x}_a(k-1|k-1)$, P($k-1|k-1$)
        - les paramètres $Q, R$ (matrices de covariance)

    - on détermine la force d'excitation $\tau_w$ exercée par la houle incidente sur le moyen mobile, noté pour ce mode de réalisation $\hat{\tau}_w(k)$, en mettant en oeuvre les étapes suivantes :

        - on applique les trois étapes de l'algorithme du filtre de Kalman sans parfum pour obtenir $\hat{x}_a(k|k)$, P($k|k$) décrites ci-dessus, ainsi on estime l'état complet avec sa matrice de covariance :

$$\hat{x}(k) = \hat{x}_a(k|k-1) + K\big(\hat{y}(k) - \hat{y}(k|k-1)\big)$$

$$K = P_{xy}(k|k-1)P_y(k|k-1)^{-1}$$

$$P_x(k|k) = P_x(k|k-1) - KP_y(k|k-1)K^T$$

avec $x_a(k)$ le vecteur d'état inconnu $x_a(k) = \begin{bmatrix} x(k) \\ \tau_w(k) \end{bmatrix}$, $A_a, B_a, C_a, D_a$ des matrices de la réalisation d'état, P la matrice de covariance du vecteur d'état, Q et R des matrices de calibration.

        - et on extrait la dernière composante du vecteur d'état estimé, c'est-à-dire la force d'excitation $\tau_w$ exercée par la houle incidente sur le moyen mobile par une équation de la forme : $\hat{w}(k) = [0\ 1]\ \hat{x}_a(k|k)$

7) Commande du système houlomoteur

Il s'agit d'une étape facultative. Lors de cette étape, on contrôle le système houlomoteur, de manière à prendre en compte la force d'excitation exercée par la houle incidente. Ainsi, il est possible de piloter le système houlomoteur, afin d'optimiser l'énergie récupérée.

La commande peut consister en un contrôle du moyen mobile du système houlomoteur, par exemple au moyen d'une machine de conversion électrique, pneumatique ou hydraulique, nommé système PTO (de l'anglais « power take-off »). Ce système PTO influence le mouvement du moyen mobile et permet de transférer l'énergie mécanique au réseau électrique, pneumatique ou hydraulique. La commande prédictive par modèle (MPC) est un exemple de méthode de commande de systèmes houlomoteurs.

Exemples comparatifs

Les caractéristiques et avantages du procédé selon l'invention apparaîtront plus clairement à la lecture des exemples comparatifs ci-après.

Pour les exemples, on considère un système houlomoteur à volet, tel qu'illustré en figure 1, à petite échelle pour des tests en bassin.

Les paramètres hydrodynamiques du système houlomoteur sont décrits dans le tableau 1.

Tableau 1 - paramètres hydrodynamiques du système houlomoteur

| Paramètres hydrodynamiques | | |
|---|---|---|
| Moment d'inertie total | $I_{eq} + I_\infty$ | 0,2753 kg·m$^2$ |
| Coefficient de raideur hydrostatique | $K$ | 118,25 N·m·rad$^{-1}$ |
| Coefficient de trainée | $\beta$ | 2 N·m·rad$^{-1}$·s$^2$ |

De plus, pour la représentation d'état du système houlomoteur, on utilise les matrices suivantes :

$$A_r = \begin{bmatrix} -5,1899 & -36,7434 \\ 1 & 0 \end{bmatrix}, B_r = \begin{bmatrix} 1 \\ 0 \end{bmatrix}, C_r = [13,2612 \quad 0], D_r = 0$$

Dans un premier temps, pour ce système houlomoteur on détermine la force d'excitation exercée par la houle sur le moyen mobile au moyen du procédé selon l'art antérieur décrit dans la demande de brevet FR 3049989, au moyen d'un filtre de Kalman linaire après linéarisation du terme de traînée. La figure 2 illustre les courbes du couple d'excitation $\tau_w$ en Nm exercé par la houle sur le moyen mobile en fonction du temps T en s, pour une vague régulière. La courbe REF en trait continu correspond au couple de référence, réellement exercé, et la courbe EST en traits pointillés correspond au couple estimé par ce procédé de l'art antérieur. On remarque que le procédé selon l'art antérieur avec le filtre de Kalman linéaire donne des résultats imprécis, avec une imprécision qui augmente avec l'amplitude de la houle.

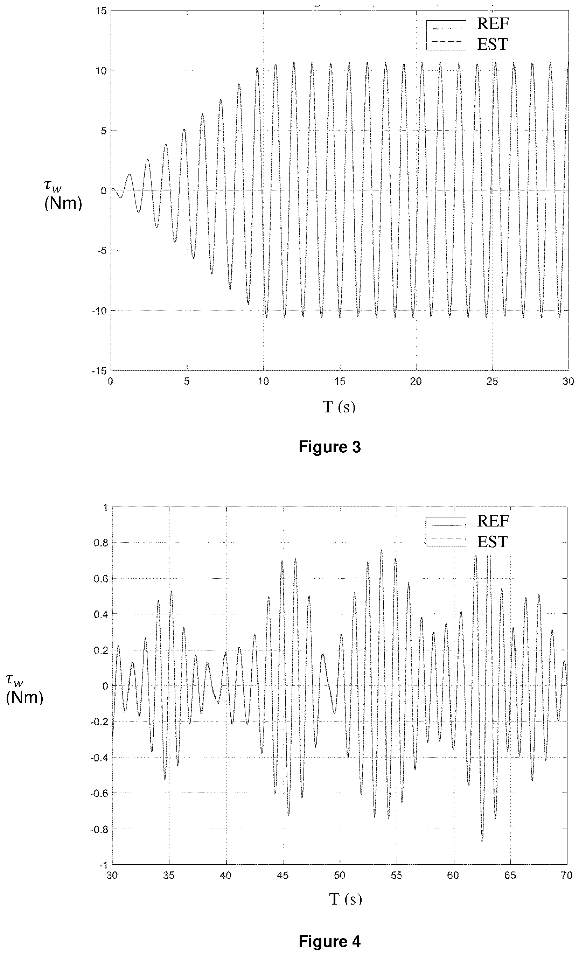

Dans un deuxième temps, pour ce système houlomoteur, on détermine la force d'excitation exercée par la houle sur le moyen mobile au moyen du procédé selon l'invention (au moyen d'un filtre Kalman sans parfum). La figure 3 illustre les courbes du couple d'excitation $\tau_w$ en Nm exercé par la houle sur le moyen mobile en fonction du temps T en s, pour une vague régulière. La courbe REF en trait continu correspond au couple de référence, réellement exercé, et la courbe EST en traits pointillés correspond au couple estimé par ce procédé selon l'invention. Les courbes REF et EST sont superposées, ce qui montre que le procédé selon l'invention permet une détermination précise du couple d'excitation exercée par la houle sur le moyen mobile.

Dans un troisième temps, on répète le deuxième test de la figure 2 pour une houle irrégulière. La figure 4 illustre les courbes du couple d'excitation $\tau_w$ en Nm exercé par la houle sur le moyen mobile en fonction du temps T en s, pour une vague irrégulière. La courbe REF en trait continu correspond au couple de référence, réellement exercé, et la courbe EST en traits pointillés correspond au couple estimé par ce procédé selon l'invention. Les courbes REF et EST sont superposées, ce qui montre que le procédé selon l'invention permet une détermination précise du couple d'excitation exercée par la houle sur le moyen mobile, même pour une houle irrégulière.

Le procédé selon l'invention est donc bien adapté pour déterminer de manière précise la force d'excitation exercée par la houle sur le moyen mobile, en particulier d'un système houlomoteur non linéaire.

**Revendications**

1. Procédé de détermination d'une force d'excitation exercée par la houle sur un moyen mobile (2) d'un système houlomoteur (1), ledit système houlomoteur (1) convertissant l'énergie de la houle en énergie au moyen dudit moyen mobile (2) coopérant avec une machine de conversion (3), ledit moyen mobile (2) effectuant un mouvement par rapport à ladite machine de conversion (3) sous l'action de la houle, **caractérisé en ce qu'**on réalise les étapes suivantes :

   a) on mesure la position et la vitesse dudit moyen mobile (2) ;
   b) on mesure la force u exercée par ladite machine de conversion (3) sur ledit moyen mobile (2) ;
   c) on construit un modèle de la force $\tau_{rad}$ de radiation exercée sur ledit moyen mobile (2), ledit modèle de la force de radiation reliant ladite force de radiation $\tau_{rad}$ à la vitesse dudit moyen mobile (2) ;
   d) on construit un modèle non linéaire de force de trainée $\tau_d$ exercée sur ledit moyen mobile (2), ledit modèle de force de trainée reliant ladite force de trainée $\tau_d$ à la vitesse dudit moyen mobile (2) ;
   e) on construit un modèle de dynamique dudit système houlomoteur qui relie ladite force d'excitation $\tau_w$ exercée par la houle incidente sur ledit moyen mobile (2), à ladite position dudit moyen mobile (2), à ladite vitesse du moyen mobile (2), à ladite force u exercée par ladite machine de conversion (3) sur ledit moyen mobile (2), à ladite force de radiation $\tau_{rad}$ exercée sur ledit moyen mobile (2) et à ladite force de trainée $\tau_d$ exercée sur ledit moyen mobile (2) ; et
   f) on détermine ladite force d'excitation $\tau_w$ exercée par la houle incidente sur ledit moyen mobile (2) au moyen dudit modèle de dynamique, dudit modèle de la force de radiation, dudit modèle de la force de trainée $t_d$, desdites position et vitesse mesurées et de ladite force u mesurée exercée par ladite machine de conversion (3) sur ledit moyen mobile (2) et au moyen d'un filtre de Kalman sans parfum construit à partir d'un modèle de marche aléatoire de ladite force d'excitation exercée par la houle incidente sur ledit moyen mobile (2).

2. Procédé selon la revendication 1, dans lequel on construit ledit modèle de dynamique dudit système houlomoteur au moyen d'une équation du type :
   $I_{eq}\ddot{\delta}(t) = \tau_{hd}(t) + \tau_{rad}(t) + \tau_d(t) + \tau_w(t) - u(t)$ avec $I_{eq}$ le moment d'inertie total dudit moyen mobile (2), $\delta(t)$ l'angle de rotation dudit moyen mobile (2) par rapport à la position d'équilibre, avec $\ddot{\delta}(t)$ l'accélération angulaire dudit moyen mobile (2) et $\dot{\delta}(t)$ la vitesse angulaire dudit moyen mobile (2), $\tau_{hd}(t)$ le moment de rappel hydrostatique, $\tau_{rad}(t)$ le moment de radiation, $\tau_d(t)$ le moment de trainée, $\tau_w(t)$ le moment d'excitation de la vague, u(t) le moment exercé par ladite machine de conversion (3) sur ledit moyen mobile (2).

3. Procédé selon la revendication 2, dans lequel on détermine le moment de rappel hydrostatique $\tau_{hd}(t)$ au moyen d'une formule du type :

$$\tau_{hd}(t) = -K\delta(t)$$

   où K est le coefficient de raideur hydrostatique.

4. Procédé selon l'une des revendications précédentes, dans lequel on construit ledit modèle de force de radiation par une équation du type :

   $\tau_{rad}(t) = -I_\infty \ddot{S}(t) - \tau_r(t)$ avec $I_\infty$ est le moment d'inertie ajouté à fréquence infiniment élevée et
   $\tau_r(t) = \int_0^t h(t-s)\dot{\delta}(s)ds = h(t) * \dot{\delta}(t)$, avec h la réponse impulsionnelle qui relie la vitesse du moyen mobile à l'amortissement de radiation et $\dot{\delta}(t)$ la vitesse angulaire dudit moyen mobile (2).

5. Procédé selon l'une des revendications précédentes, dans lequel on construit ledit modèle de force de trainée par une équation du type :

$$\tau_d(t) = \beta\dot{\delta}(t)\left|\dot{\delta}(t)\right|$$

   où $\beta$ est le coefficient de trainée et $\dot{\delta}(t)$ la vitesse angulaire dudit moyen mobile (2).

6. Procédé selon l'une des revendications 1 à 4, dans lequel ledit modèle de la force de trainée $F_d$ peut s'écrire par une équation de la forme :

$$F_d(t) = \beta \dot{z}(t)|\dot{z}(t)|$$

avec $\beta$ le coefficient de trainée,
et z la vitesse du moyen mobile.

7. Procédé selon l'une des revendications précédentes, dans lequel on détermine ladite force d'excitation $\tau_w$ exercée par la houle incidente sur ledit moyen mobile (2) en mettant en oeuvre les étapes suivantes :

i) on initialise k=0, le vecteur d'état $\hat{x}_a(0|0)$=m(0) et l'état de la matrice de covariance, $P(0|0) = P_0$ ;
ii) à chaque instant k, on acquiert lesdites mesures de position et de vitesse dudit moyen mobile $y(k) = [\delta(k) \; \dot{\delta}(k)]$ et la mesure de ladite force exercée par ladite machine de conversion sur ledit moyen mobile $u(k)$ ; et
iii) à chaque instant k, on détermine la force d'excitation exercée par la houle incidente sur ledit moyen mobile (2) $\hat{\tau}_w(k)$ au moyen des équations suivantes :

$$\hat{\tau}_w(k) = [0 \quad 1]\hat{x}_a(k|k)$$

$$P_x(k|k) = P_x(k|k-1) - KP_y(k|k-1)K^T$$

$$K = P_{xy}(k|k-1)P_y(k|k-1)^{-1}$$

$$\hat{x}(k) = \hat{x}_a(k|k-1) + K\big(\hat{y}(k) - \hat{y}(k|k-1)\big)$$

$$P_{xy}(k|k-1) = \sum_{j=0}^{2n} W_j^c \big(\hat{x}_j(k|k-1) - x_a(k|k-1)\big)\big(\hat{y}_j(k|k-1) - y(k|k-1)\big)^T$$

$$\hat{y}(k|k-1) = \sum_{j=0}^{2n} W_j^m \hat{y}_j(k|k-1),$$

$$P_y(k|k-1) = \sum_{j=0}^{2n} W_j^c \big(\hat{y}_j(k|k-1) - y(k|k-1)\big)\big(\hat{y}_j(k|k-1) - y(k|k-1)\big)^T + R$$

$$\hat{y}_j(k|k-1) = C_a\hat{x}_j(k|k-1)$$

$$\hat{x}(k|k-1) = \sum_{j=0}^{2n} W_j^m \hat{x}_j(k|k-1),$$

$$P_x(k|k-1) = \sum_{j=0}^{2n} W_j^c \big(\hat{x}_j(k|k-1) - x_a(k|k-1)\big)\big(\hat{x}_j(k|k-1) - x_a(k|k-1)\big)^T + Q.$$

$$\hat{x}_j(k|k-1) = A_a x_j(k-1) + f_a\big(x_j(k-1)\big) + B_a u(k-1), \qquad j = 0,1,...,2n$$

$$x_0(k-1) = \hat{x}_a(k-1|k-1),$$

$$x_i(k-1) = \hat{x}_a(k-1|k-1) + \sqrt{n+\lambda}\, S_i(k-1), i = 1,2,\ldots,n$$

$$x_{i+n}(k-1) = \hat{x}_a(k-1|k-1) - \sqrt{n+\lambda}\, S_i(k-1), i = 1,2,\ldots,n$$

où $S_i(k$ - 1$)$ est la $i$-ème colonne de la racine carrée matricielle de $P_x(k$ - 1$|k$ - 1$)$, soit

$$P_x(k|k-1) = S(k-1)^T S(k-1)$$

$x_a(k)$ le vecteur d'état inconnu $\quad x_a(k) = \begin{bmatrix} x(k) \\ \tau_w(k) \end{bmatrix}$ , $A_a, B_a, C_a, D_a$ des matrices de la réalisation d'état, P la matrice de covariance du vecteur d'état, Q et R des matrices de calibration.

**8.** Procédé selon l'une des revendications précédentes, dans lequel on commande ledit système houlomoteur en fonction de ladite force déterminée d'excitation $\tau_w$ exercée par la houle incidente sur ledit moyen mobile (2).

**9.** Procédé selon l'une des revendications précédentes, dans lequel ledit système houlomoteur est un système houlomoteur de type à convertisseur submergé à différentiel de pression de forme plate, de type machine à masse tournante tanguant en surface ou du type système houlomoteur à volet.

**10.** Système houlomoteur **caractérisé en ce qu'**il comprend des moyens de mesure et de commande, notamment des moyens de commande informatique, mettant en oeuvre un procédé selon l'une des revendications 1 à 9.

**Patentansprüche**

**1.** Verfahren zur Bestimmung einer Anregungskraft, die von der Welle auf eine bewegliche Einrichtung (2) eines Wellenenergiesystems (1) ausgeübt wird, wobei das Wellenenergiesystem (1) die Energie der Welle mittels der beweglichen Einrichtung (2), die mit einer Umwandlungsmaschine (3) zusammenwirkt, in Energie umwandelt, wobei die bewegliche Einrichtung (2) eine Bewegung in Bezug auf die Umwandlungsmaschine (3) unter der Einwirkung der Welle vollführt, **dadurch gekennzeichnet, dass** man die folgenden Schritte ausführt:

a) man misst die Position und die Geschwindigkeit der beweglichen Einrichtung (2);
b) man misst die Kraft u, die von der Umwandlungsmaschine (3) auf die bewegliche Einrichtung (2) ausgeübt wird;
c) man erstellt ein Modell der Strahlungskraft $\tau_{rad}$, die auf die bewegliche Einrichtung (2) ausgeübt wird, wobei das Modell der Strahlungskraft die Strahlungskraft $\tau_{rad}$ mit der Geschwindigkeit der beweglichen Einrichtung (2) verknüpft;
d) man erstellt ein nichtlineares Modell der Schleppkraft $\tau_d$, die auf die bewegliche Einrichtung (2) ausgeübt wird, wobei das Schleppkraftmodell die Schleppkraft $\tau_d$ mit der Geschwindigkeit der beweglichen Einrichtung (2) verknüpft;
e) man erstellt ein Dynamikmodell des Wellenergiesystems, das die Anregungskraft $\tau_w$, die von der auf die bewegliche Einrichtung (2) auftreffenden Welle ausgeübt wird, mit der Position der beweglichen Einrichtung (2), mit der Geschwindigkeit der beweglichen Einrichtung (2), mit der Kraft u, die von der Umwandlungsmaschine (3) auf die bewegliche Einrichtung (2) ausgeübt wird, mit der Strahlungskraft $\tau_{rad}$, die auf die bewegliche Einrichtung (2) ausgeübt wird, und mit der Schleppkraft $t_d$, die auf die bewegliche Einrichtung (2) ausgeübt wird, verknüpft; und
f) man bestimmt die Anregungskraft $\tau_w$, die von der auf die bewegliche Einrichtung (2) auftreffenden Welle ausgeübt wird, mittels des Dynamikmodells, des Modells der Strahlungskraft, des Modells der Schleppkraft $\tau_d$, der gemessenen Position und Geschwindigkeit und der gemessenen Kraft u, die von der Umwandlungsmaschine (3) auf die bewegliche Einrichtung (2) ausgeübt wird, und mittels eines Unscented Kalman-Filters, das ausgehend von einem Random-Walk-Modell der Anregungskraft, die von der auf die bewegliche Einrichtung (2) auftreffenden Welle ausgeübt wird, erstellt wird.

**2.** Verfahren nach Anspruch 1, bei dem man das Dynamikmodell des Wellenergiesystems mittels einer Gleichung des folgenden Typs erstellt:

$I_{eq}\ddot{\delta}(t) = \tau_{hd}(t) + \tau_{rad}(t) + \tau_d(t) + \tau_w(t) - u(t)$, wobei $I_{eq}$ das Gesamtträgheitsmoment der beweglichen Einrichtung (2) ist, $\delta(t)$ der Rotationswinkel der beweglichen Einrichtung (2) in Bezug auf die Gleichgewichtsposition ist, wobei $\ddot{\delta}(t)$ die Winkelbeschleunigung der beweglichen Einrichtung (2) ist und $\dot{\delta}(t)$ die Winkelgeschwindigkeit der beweglichen Einrichtung (2) ist, $\tau_{hd}(t)$ das hydrostatische Rückholmoment ist, $\tau_{rad}(t)$ das Strahlungsmoment ist, $\tau_d(t)$ das Schleppmoment ist, $\tau_w(t)$ das Anregungsmoment der Welle ist, $u(t)$ das von der Umwandlungsmaschine (3) auf die bewegliche Einrichtung (2) ausgeübte Moment ist.

3. Verfahren nach Anspruch 2, bei dem man das hydrostatische Rückholmoment $\tau_{hd}(t)$ mittels einer Formel des folgenden Typs bestimmt:

$$\tau_{hd}(t) = -K\delta(t)$$

worin $K$ der hydrostatische Steifigkeitskoeffizient ist.

4. Verfahren nach einem der vorhergehenden Ansprüche, bei dem man das Strahlungskraftmodell mit einer Gleichung des folgenden Typs erstellt:

$\tau_{rad}(t) = -I_\infty\ddot{\delta}(t) - \tau_r(t)$, wobei $I_\infty$ das hinzugefügte Trägheitsmoment mit unendlich hoher Frequenz ist und

$$\tau_r(t) = \int_0^t h(t-s)\dot{\delta}(s)ds = h(t) * \dot{\delta}(t)$$

, wobei h die Impulsantwort ist, die die Geschwindigkeit der beweglichen Einrichtung mit der Strahlungsdämpfung verknüpft, und $\dot{\delta}(t)$ die Winkelgeschwindigkeit der beweglichen Einrichtung (2) ist.

5. Verfahren nach einem der vorhergehenden Ansprüche, bei dem man das Schleppkraftmodell mit einer Gleichung des folgenden Typs erstellt:

$$\tau_d(t) = \beta\dot{\delta}(t)\left|\dot{\delta}(t)\right|$$

worin $\beta$ der Schleppkoeffizient ist und $\dot{\delta}(t)$ die Winkelgeschwindigkeit der beweglichen Einrichtung (2) ist.

6. Verfahren nach einem der Ansprüche 1 bis 4, bei dem sich das Modell der Schleppkraft $F_d$ durch eine Gleichung der folgenden Form schreiben lässt:

$$F_d(t) = \beta\dot{z}(t)\left|\dot{z}(t)\right|$$

wobei $\beta$ der Schleppkoeffizient ist,
und $\dot{z}$ die Geschwindigkeit der beweglichen Einrichtung ist.

7. Verfahren nach einem der vorhergehenden Ansprüche, bei dem man die Anregungskraft $\tau_w$, die von der auf die bewegliche Einrichtung (2) auftreffenden Welle ausgeübt wird, bestimmt, indem man die folgenden Schritte umsetzt:

i) man initialisiert k=0, den Zustandsvektor $\hat{x}_a(0|0) = m(0)$ und den Zustand der Kovarianzmatrix, $P(0|0) = P_0$;
ii) man erfasst zu jedem Zeitpunkt k die Positions- und Geschwindigkeitsmessungen der beweglichen Einrichtung $y(k) = [\delta(k)\ \dot{\delta}(k)]$ und die Messung der Kraft, die von der Umwandlungsmaschine auf die bewegliche Einrichtung $u(k)$ ausgeübt wird; und
iii) man bestimmt zu jedem Zeitpunkt k die Anregungskraft $\hat{\tau}_w(k)$, die von der auf die bewegliche Einrichtung (2) auftreffenden Welle ausgeübt wird, mittels der folgenden Gleichungen:

$$\hat{\tau}_w(k) = [0 \quad 1]\hat{x}_a(k|k)$$

$$P_x(k|k) = P_x(k|k-1) - KP_y(k|k-1)K^T$$

$$K = P_{xy}(k|k-1)P_y(k|k-1)^{-1}$$

$$\hat{x}(k) = \hat{x}_a(k|k-1) + K\big(\hat{y}(k) - \hat{y}(k|k-1)\big)$$

$$P_{xy}(k|k-1) = \sum_{j=0}^{2n} W_j^c \left(\hat{x}_j(k|k-1) - x_a(k|k-1)\right)\left(\hat{y}_j(k|k-1) - y(k|k-1)\right)^T$$

$$\hat{y}(k|k-1) = \sum_{j=0}^{2n} W_j^m \hat{y}_j(k|k-1),$$

$$P_y(k|k-1) = \sum_{j=0}^{2n} W_j^c \left(\hat{y}_j(k|k-1) - y(k|k-1)\right)\left(\hat{y}_j(k|k-1) - y(k|k-1)\right)^T + R$$

$$\hat{y}_j(k|k-1) = C_a \hat{x}_j(k|k-1)$$

$$\hat{x}(k|k-1) = \sum_{j=0}^{2n} W_j^m \hat{x}_j(k|k-1),$$

$$P_x(k|k-1) = \sum_{j=0}^{2n} W_j^c \left(\hat{x}_j(k|k-1) - x_a(k|k-1)\right)\left(\hat{x}_j(k|k-1) - x_a(k|k-1)\right)^T + Q.$$

$$\hat{x}_j(k|k-1) = A_a x_j(k-1) + f_a\big(x_j(k-1)\big) + B_a u(k-1), \qquad j = 0,1,\dots,2n$$

$$x_0(k-1) = \hat{x}_a(k-1|k-1),$$

$$x_i(k-1) = \hat{x}_a(k-1|k-1) + \sqrt{n+\lambda}\,S_i(k-1), i = 1,2,\dots,n$$

$$x_{i+n}(k-1) = \hat{x}_a(k-1|k-1) - \sqrt{n+\lambda}\,S_i(k-1), i = 1,2,\dots,n$$

worin $S_i(k-1)$ die i-te Spalte der Matrixwurzel von $P_x(k-1|k-1)$, ist, somit $P_x(k|k-1) = S(k-1)^T S(k-1)$

$x_a(k)$ der unbekannte Zustandsvektor $x_a(k) = \begin{bmatrix} x(k) \\ \tau_w(k) \end{bmatrix}$, ist, $A_a, B_a, C_a, D_a$ Matrizen der Zustandsrealisierung sind, P die Kovarianzmatrix des Zustandsvektors ist, Q und R Kalibrierungsmatrizen sind.

8. Verfahren nach einem der vorhergehenden Ansprüche, bei dem man das Wellenenergiesystem in Abhängigkeit von der bestimmten Anregungskraft $\tau_w$ steuert, die von der auf die bewegliche Einrichtung (2) auftreffenden Welle ausgeübt wird.

9. Verfahren nach einem der vorhergehenden Ansprüche, bei dem das Wellenenergiesystem ein Wellenenergiesystem vom Typ mit flachem untergetauchtem Druckdifferenz-Konverter, vom Typ einer Maschine mit an der Oberfläche schwimmender rotierender Masse oder vom Typ Wellenenergiesystem mit Klappe ist.

10. Wellenenergiesystem, **dadurch gekennzeichnet, dass** es Mess- und Steuerungsmittel umfasst, insbesondere informationstechnische Steuerungsmittel, die ein Verfahren nach einem der Ansprüche 1 bis 9 umsetzen.

**Claims**

1. Method for determining an excitation force exerted by swell on a moving part (2) of a wave-energy converter (1), said wave-energy converter (1) converting the energy of the swell into energy via interaction of said moving part (2) with a conversion machine (3), said moving part (2) making a movement with respect to said conversion machine (3) under the action of the swell, **characterized in that** the following steps are carried out:

   a) the position and speed of said moving part (2) are measured;
   b) the force $u$ exerted by said conversion machine (3) on said moving part (2) is measured;
   c) a model of the radiation force $\tau_{rad}$ exerted on said moving part (2) is constructed, said model of the radiation force relating said radiation force $\tau_{rad}$ to the speed of said moving part (2);
   d) a non-linear model of the drag force $\tau_d$ exerted on said moving part (2) is constructed, said model of the drag force relating said drag force $\tau_d$ to the speed of said moving part (2);
   e) a dynamic model of said wave-energy converter is constructed, said dynamic model relating said excitation force $\tau_w$ exerted by the swell incident on said moving part (2), to said position of said moving part (2), to said speed of the moving part (2), to said force $u$ exerted by said conversion machine (3) on said moving part (2), to said radiation force $\tau_{rad}$ exerted on said moving part (2) and to said drag force $\tau_d$ exerted on said moving part (2); and
   f) said excitation force $\tau_w$ exerted by the swell incident on said moving part (2) is determined by means of said dynamic model, of said model of the radiation force, of said model of the drag force $t_d$, of said measured position and speed and of said measured force $u$ exerted by said conversion machine (3) on said moving part (2) and by means of an unscented Kalman filter constructed on the basis of a random-walk model of said excitation force exerted by the swell incident on said moving part (2).

2. Method according to Claim 1, wherein said dynamic model of said wave-energy converter is constructed by means of an equation of the type:

$$I_{eq}\ddot{\delta}(t) = \tau_{hd}(t) + \tau_{rad}(t) + \tau_d(t) + \tau_w(t) - u(t)$$

with $I_{eq}$ the total moment of inertia of said moving part (2), $\delta(t)$ the angle of rotation of said moving part (2) with respect to the equilibrium position, with $\ddot{\delta}(t)$ the angular acceleration of said moving part (2) and $\dot{\delta}(t)$ the angular velocity of said moving part (2), $\tau_{hd}(t)$ the hydrostatic restoring moment, $\tau_{rad}(t)$ the radiation moment, $\tau_d(t)$ the drag moment, $\tau_w(t)$ the excitation moment of the wave, and $u(t)$ the moment exerted by said conversion machine (3) on said moving part (2).

3. Method according to Claim 2, wherein the hydrostatic restoring moment $\tau_{hd}(t)$ is determined by means of a formula of the type:

$$\tau_{hd}(t) = -K\delta(t)$$

where $K$ is the hydrostatic stiffness constant.

4. Method according to one of the preceding claims, wherein said model of the radiation force is constructed via an equation of the type:

$$\tau_{rad}(t) = -I_\infty\ddot{\delta}(t) - \tau_r(t)$$

with $I_\infty$ the moment of inertia added at infinitely high frequency and

$$\tau_r(t) = \int_0^t h(t-s)\dot{\delta}(s)ds = h(t) * \dot{\delta}(t)$$

with $h$ the pulse response relating the speed of the moving part to the radiation damping and $\dot{\delta}(t)$ the angular velocity of said moving part (2).

5. Method according to one of the preceding claims, wherein said model of the drag force is constructed via an equation of the type:

$$\tau_d(t) = \beta \dot{\delta}(t)|\dot{\delta}(t)|$$

where $\beta$ is the drag coefficient and $\dot{\delta}(t)$ the angular velocity of said moving part (2).

6. Method according to one of Claims 1 to 4, wherein said model of the drag force $F_d$ may be written as an equation of the form:

$$F_d(t) = \beta \dot{z}(t)|\dot{z}(t)|$$

with $\beta$ the drag coefficient
and z the speed of the moving part.

7. Method according to one of the preceding claims, wherein said excitation force $\tau_w$ exerted by the swell incident on said moving part (2) is determined by implementing the following steps:

i) the following are initialized as follows $k = 0$, the state vector $\hat{x}_a(0|0) = m(0)$ and the state of the covariance matrix $P(0|0) = P_0$;
ii) at every given time $k$, said measurements of the position and speed $y(k) = [\delta(t)\ \dot{\delta}(k)]$ of said moving part and the measurement of said force $u(k)$ exerted by said conversion machine on said moving part are acquired; and
iii) at every given time $k$, the excitation force $\hat{\tau}_w(k)$ exerted by the swell incident on said moving part (2) is determined by means of the following equations:

$$\hat{\tau}_w(k) = [0 \quad 1]\hat{x}_a(k|k)$$

$$P_x(k|k) = P_x(k|k-1) - KP_y(k|k-1)K^T$$

$$K = P_{xy}(k|k-1)P_y(k|k-1)^{-1}$$

$$\hat{x}(k) = \hat{x}_a(k|k-1) + K\left(\hat{y}(k) - \hat{y}(k|k-1)\right)$$

$$P_{xy}(k|k-1) = \sum_{j=0}^{2n} W_j^c \left(\hat{x}_j(k|k-1) - x_a(k|k-1)\right)\left(\hat{y}_j(k|k-1) - y(k|k-1)\right)^T$$

$$\hat{y}(k|k-1) = \sum_{j=0}^{2n} W_j^m \hat{y}_j(k|k-1),$$

$$P_y(k|k-1) = \sum_{j=0}^{2n} W_j^c \left(\hat{y}_j(k|k-1) - y(k|k-1)\right)\left(\hat{y}_j(k|k-1) - y(k|k-1)\right)^T + R$$

$$\hat{y}_j(k|k-1) = C_a \hat{x}_j(k|k-1)$$

$$\hat{x}(k|k-1) = \sum_{j=0}^{2n} W_j^m \hat{x}_j(k|k-1),$$

$$P_x(k|k-1) = \sum_{j=0}^{2n} W_j^c \left( \hat{x}_j(k|k-1) - x_a(k|k-1) \right) \left( \hat{x}_j(k|k-1) - x_a(k|k-1) \right)^T + Q.$$

$$\hat{x}_j(k|k-1) = A_a x_j(k-1) + f_a\left(x_j(k-1)\right) + B_a u(k-1), \qquad j = 0, 1, \ldots, 2n$$

$$x_0(k-1) = \hat{x}_a(k-1|k-1),$$

$$x_i(k-1) = \hat{x}_a(k-1|k-1) + \sqrt{n+\lambda}\, S_i(k-1), i = 1, 2, \ldots, n$$

$$x_{i+n}(k-1) = \hat{x}_a(k-1|k-1) - \sqrt{n+\lambda}\, S_i(k-1), i = 1, 2, \ldots, n$$

where $S_i(k-1)$ is the i-th column of the matrix square root of $P_x(k-1|k-1)$, i.e. $P_x(k|k-1) = S(k-1)^T S(k-1)$,

$$x_a(k) = \begin{bmatrix} x(k) \\ \tau_w(k) \end{bmatrix}$$

$x_a(k)$ is the unknown state vector, $A_a$, $B_a$, $C_a$ and $D_a$ are matrices of the state description, P is the covariance matrix of the state vector, and $Q$ and $R$ are calibration matrices.

8. Method according to one of the preceding claims, wherein said wave-energy converter is controlled depending on said determined excitation force $\tau_w$ exerted by the swell incident on said moving part (2).

9. Method according to one of the preceding claims, wherein said wave-energy converter is a flat-shaped differential-pressure submerged wave-energy converter, a machine involving a rotating mass pitching on the water's surface or a flap-based wave-energy converter.

10. Wave-energy converter **characterized in that** it comprises measuring and control means, especially computerized control means, implementing a method according to one of Claims 1 to 9.

**Figure 1**

**Figure 2**

**Figure 3**

**Figure 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876751
- WO 2009081042 A
- FR 2973448
- US 9261070 B
- FR 3049989
- WO 2017174244 A
- US 20170298899 A1

**Littérature non-brevet citée dans la description**

- **PETER KRACHT ; SEBASTIAN PEREZ-BECKER ; JEAN-BAPTISTE RICHARD ; BORIS FISCHER.** Performance Improvement of a Point Absorber Wave Energy Converter by Application of an Observer-Based Control: Results from Wave Tank Testing. *IEEE Transactions on Industry Applications,* Juillet 2015
- **BRADLEY A LING.** Real-Time Estimation and Prédiction of Wave Excitation Forces for Wave Energy Control Applications. *ASME 2015 34th International Conférence on Ocean, Offshore and Arctic Engineering*
- Experimental and numerical investigation of nonprédictive phase-control stratégies for a point-absorbing wave energy converter. **LOPES M F P ; L.** Ocean engineering. pergamon, 01 Avril 2009, vol. 36, 386-402
- dominant wave frequency and amplitude estimation for adaptive control of wave energy converters. **NGUYEN HOI-NAM et al.** Océans 2017 - ABERDEEN. IEEE, 19 Juin 2017, 1-6
- **FAINES J ; KURNIAWAN A.** Fundamental formulae for wave-energy conversion. *Soc. open sci.,* 2005, vol. 2, 140305